**Europäisches Patentamt**

**European Patent Office**

**Office européen des brevets**

(19)

(11) Veröffentlichungsnummer: **0 034 359**

**A1**

(12) # EUROPÄISCHE PATENTANMELDUNG

(21) Anmeldenummer: **81101064.4**

(22) Anmeldetag: **16.02.81**

(51) Int. Cl.³: **A 01 D 69/00**
**A 01 D 53/08**

(30) Priorität: **18.02.80 DE 3005991**

(43) Veröffentlichungstag der Anmeldung:
**26.08.81 Patentblatt 81/34**

(84) Benannte Vertragsstaaten:
**AT BE CH FR GB IT LI NL**

(71) Anmelder: **Hagemann, Ulrich**
**Martin-Luther-Strasse 20**
**D-4800 Bielefeld 16(DE)**

(72) Erfinder: **Hagemann, Ulrich**
**Martin-Luther-Strasse 20**
**D-4800 Bielefeld 16(DE)**

(74) Vertreter: **Rau, Günther, Dipl.-Ing.**
**Upfeldweg 23**
**D-4800 Bielefeld 15(DE)**

(54) Fahrbarer Geräteträger zur Garten- und Grundstückspflege.

(57) Ein Rasenmäher (1) wird auf einen fahrbaren Geräteträger (6) für verschiedene Anbaugeräte aufgesattelt und durch Spannelemente (8) fest verankert. Der Antrieb des Geräteträgers (6) erfolgt über den vertikalen Antriebszapfen (10) des aufgesattelten Rasenmähers (1). Die Antriebsverbindung zwischen dem Rasenmäher (1) und dem Geräteträger (6) ist vertikal federnd und drehschlüssig ausgebildet und mit einem um 360 Grad schwenkbaren Winkeltrieb (11) ausgestattet.

EP 0 034 359 A1

./...

Fig. 1

Fahrbarer Geräteträger zur Garten-
und Grundstückspflege

Die Erfindung betrifft einen fahrbaren Geräteträger zur
Garten- und Grundstückspflege mit motorisch angetriebenen
Anbaugeräten.

Bei Vielzweckgeräten solcher Art ist es schon lange bekannt, als Antriebsaggregat ein Motorgrundgerät mit Laufrädern und Führungsholm zu verwenden, an das die verschiedenen Anbaugeräte wie Kehrwalze, Hackwelle, Balken- oder Rotationsmäher u.s.w. angebaut werden. Auch ist es schon seit Jahrzehnten üblich, solche Anbaugeräte, die man dann ihrerseits mit Laufrädern ausgerüstet hat, durch ein aufgesatteltes Motorgrundgerät anzutreiben. Diese bisher bekannten Motorgrundgeräte sind jedoch teure Geräte, die allein ohne ein Anbaugerät zu keiner Arbeit eingesetzt werden können. Erst durch eine Kopplung mit einem Anbaugerät entsteht ein brauchbares Arbeitsgerät, und nur mehrere Anbaugeräte machen solche Systeme wirtschaftlich, sie haben jedoch auch dann wegen ihres hohen Anschaffungspreises nur einen beschränkten Kundenkreis.

Im Gegensatz dazu sind Rasenmäher mit horizontal rotierenden Mähmessern in großen Stückzahlen verbreitet, sie sind ein komplettes Arbeitsgerät und aus privaten Gärten nicht mehr wegzudenken.

Diese Rasenmäher durch Austauschgeräte vielseitiger zu machen, ist bisher nur bedingt gelungen: So wird ein Rasenmäher durch Austausch des Mähmessers gegen einen Vertikutierbalken nicht zum vollwertigen Vertikutiergerät, weil die hohe Drehzahl des Rasenmäherantriebszapfens, an den der Vertikutierbalken angebaut wird, einen schnellen Verschleiß der Vertikutierwerkzeuge zur Folge hat und der zu bearbeitende Rasen oft zu stark aufgerissen wird. Auch können die beim Vertikutieren erwünschten Rinnen oder Schlitze mit dieser Vorrichtung nicht in den Rasenboden eingeschnitten werden. Neben der Gefährdung der Bedienungsperson durch aufgewirbelte Steine und Erde, wird nicht selten das Gehäuse und der Motor des Mähers beschädigt.

Eine andere Einrichtung, bei der Vertikutiermesser um eine horizontale Achse rotieren, die unter dem Mähergehäuse montiert ist und über einen Winkeltrieb vom vertikalen Antriebszapfen des Mähers angetrieben wird, hat den Nachteil, daß die Gehäuseform des Mähers nicht zur Vertikutieranordnung paßt, außerdem ihre Befestigung am Gehäuse kompliziert ist und viele Mähergehäuse, insbesondere die mit Seitenauswurf, einfach ungeeignet für den Anbau sind, ganz abgesehen davon, daß die Stabilität der Gehäuseseitenwände nicht ausreichend ist, daran eine Vertikutiereinrichtung dauerhaft festzuklemmen.

Gegenüber diesem Stand der Technik besteht die Aufgabe der Erfindung darin, die in großen Stückzahlen verbreiteten Rasenmäher mit horizontalen, rotierenden Mähmessern vielseitiger zu machen. Diese Aufgabe wird erfindungsgemäß dadurch gelöst, daß solche Mäher als Antriebsaggregat auf einen fahrbaren Geräteträger aufgesattelt werden. An diesen Geräteträger können weitere zur Garten- und Grundstückspflege geeignete Geräte angebaut werden, wobei der Antriebszapfen des auf den Geräteträger aufgesattelten Rasenmähers kraftschlüssig mit einem Winkeltrieb am Geräteträger verbunden ist. Über eine teleskopartige Gelenkwelle unterhalb des Geräteträgers wird die Kraft weiter übertragen zum jeweiligen Anbaugerät.

Die mit der Erfindung erzielten Vorteile bestehen insbesondere darin, daß Rasenmäher mit horizontal rotierendem Mähmesser neben ihrer Hauptfunktion als Rasenmäher nun auch als vollwertiges Motorgrundgerät für weitere zur Garten- und Grundstückspflege geeignete Geräte eingesetzt werden können, wodurch solche Gerätekombinationen auch für den privaten Bereich wirtschaftlicher werden.

Ein Ausführungsbeispiel der Erfindung ist in der Zeichnung dargestellt, aus ihr und der Beschreibung dazu sind noch weitere Einzelheiten der Erfindung ersichtlich. Es zeigen:

Fig. 1 den fahrbaren Geräteträger mit aufgesatteltem Rasenmäher und einem angebauten Vertikutiergerät in Seitenansicht,

Fig. 2 diese Anordnung in Draufsicht,

Fig. 3 den Geräteträger mit angebautem Vertikutiergerät in Seitenansicht ohne aufgesattelten Rasenmäher,

Fig. 4 diese Anordnung in Draufsicht,

Fig. 5 den Geräteträger mit einer angebauten Kehrwalze in Draufsicht ohne aufgesattelten Rasenmäher, jedoch gegenüber den Fig.1 bis 4 und 11 und 12 um 180 Grad gedreht,

Fig. 6 den Schnittverlauf durch den Geräteträger entlang der Linie A-B gemäß Fig.4 mit einem ebenfalls im Schnitt dargestellten Rasenmähergehäuse mit zwei Rädern kurz vor dem Aufsatteln auf den Geräteträger,

Fig. 7 und 8 je eine Seitenansicht des Winkeltriebes,
Fig. 9 in Seitenansicht die Verankerung eines Laufrades des aufgesattelten Rasenmähers,
Fig.10 dieses verankerte Laufrad in Draufsicht,
Fig.11 den Geräteträger mit aufgesatteltem Rasenmäher in Seitenansicht, wobei das Rasenmähergehäuse mit dem Geräteträger verschraubt ist
und
Fig.12 diese Anordnung in Draufsicht.

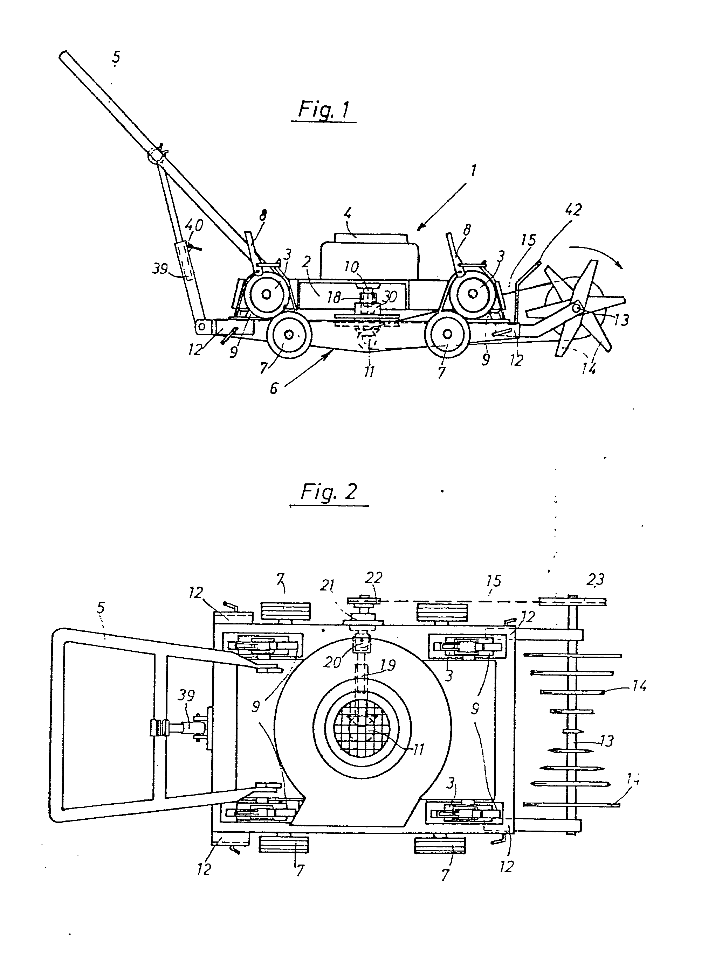

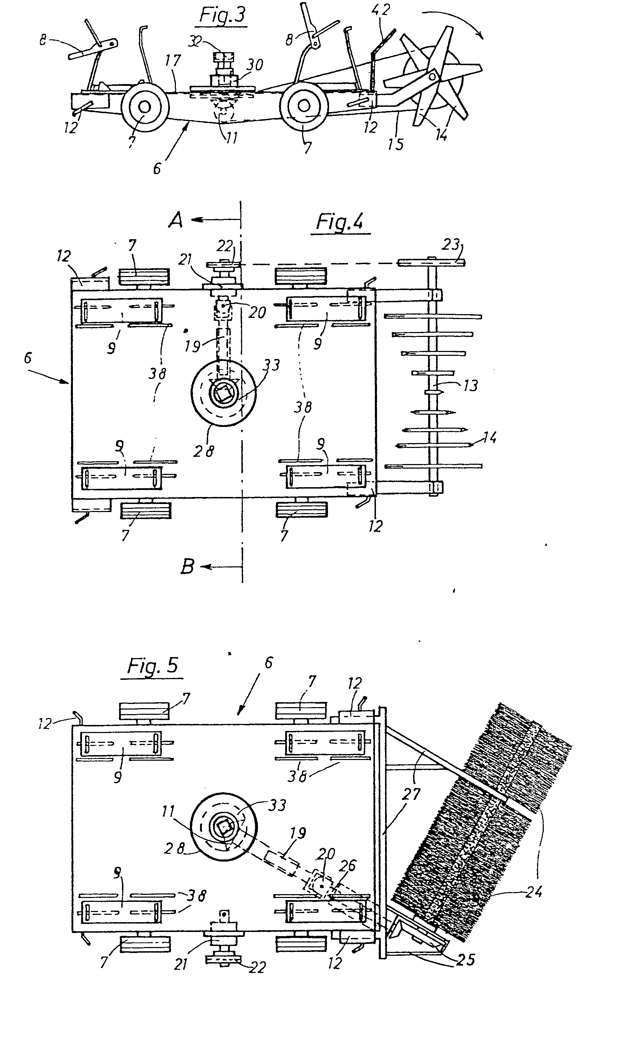

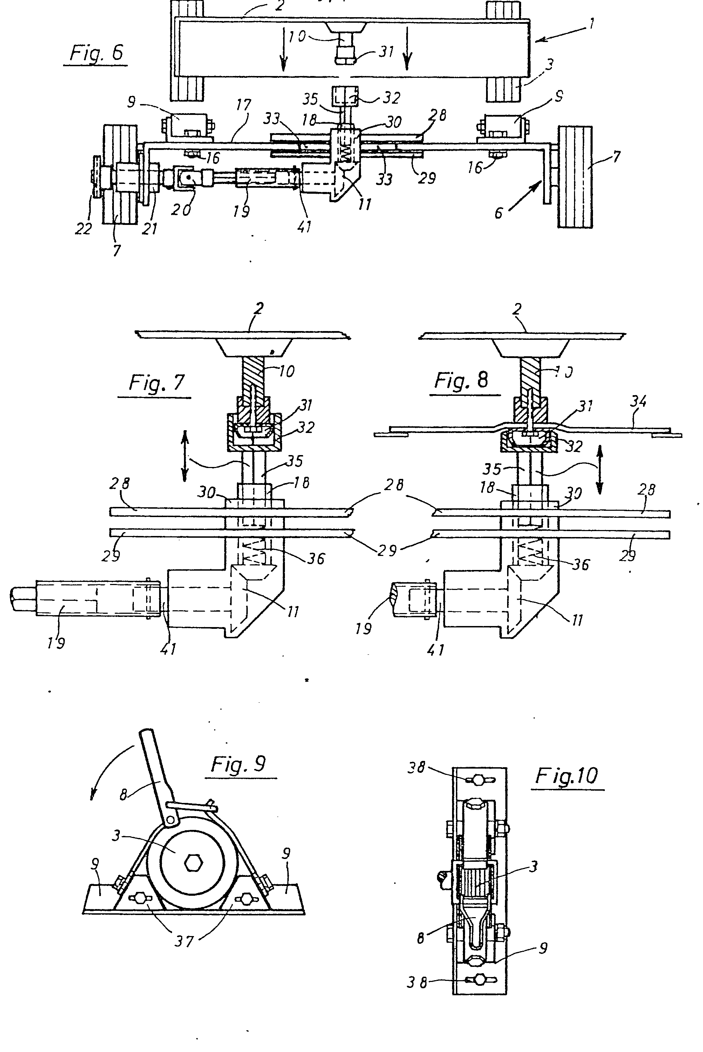

Ein motorisch betriebener Rasenmäher 1 (Fig.1) mit Gehäuse 2, Laufrädern 3, Motor 4 und Führungsholm 5 ist
erfindungsgemäß auf einem nach der Erfindung gestalteten
Geräteträger 6 (Pfeil) mit Laufrädern 7 aufgesattelt.
Die Laufräder 3 des aufgesattelten Rasenmähers 1 werden
durch Spannelemente, im dargestellten Ausführungsbeispiel durch vier Kipphebel 8, in den auf die verschiedenen Achs- und Radabstände der einzelnen Rasenmäher einstellbaren Arretierungen 9 des Geräteträgers 6 gehalten.
Für unterschiedliche Anbaugeräte sind Haltetaschen 12
vorgesehen. Die Fig. 1 bis 4 zeigen als Anbaugerät eine
Vertikutiereinrichtung mit um eine horizontale Achse 13
(Fig.1 und 2) umlaufenden Vertikutiermessern 14 und
Schutzschild 42, das in den Draufsichten der Fig. 2, 4
und 12 nicht dargestellt ist. Der vertikale Antriebszapfen 10 des aufgesattelten Rasenmähers 1 ist kraftschlüssig mit der vertikalen Antriebswelle 18 des Winkeltriebs 11 verbunden. Die Kraft wird weitergeleitet
von der horizontalen Antriebswelle 41 (Fig.6) des Winkeltriebs 11 über eine im Ausführungsbeispiel eingelenkige 20 teleskopartige Gelenkwelle 19 zum seitlich am
Geräteträger 6 angeflanschten Lager 21 und von dort über
Ketten- oder Keilriemenräder 22, 23 (Fig.2) und Antriebskette oder Keilriemen 15 zur Achse 13 des angebauten
Vertikutiergerätes. Der Winkeltrieb 11 mit Gehäuse ist um 360 Grad schwenkbar zu dem Zweck, Anbaugeräte allseitig am Geräteträger 6 anbauen und auch antreiben zu können. Dazu zeigt die Fig.5 als Anbaugerät eine Kehrwalze 24. Hierbei ist die Gelenkwelle 19 durch Schnellverschluß vom Lager 21 abgekoppelt, der Winkeltrieb 11 mit Gelenkwelle 19 um etwa 45 Grad geschwenkt und an den Getriebeteil 25 der Kehrwalze 24 im Punkt 26 angekoppelt. Die Kehrwalze 24 ist mit ihrem Rahmen 27 an den Haltetaschen 12 des Geräteträgers 6 befestigt.

Der um 360 Grad schwenkbare Winkeltrieb 11 ist außerdem horizontal in jeder Richtung verschiebbar, um einen eventuellen Parallelversatz des vertikalen Antriebszapfens 10 und der vertikeln Welle 18 des Winkeltriebs 11 automatisch auszugleichen und den Antriebszapfen 10 so vor Radialbelastungen zu schützen. Im Mittelbereich der Aufsattelfläche 17 (Fig.6) ist daher in einer Öffnung 33 der im Durchmesser kleinere vertikale Teil 30 des Winkeltriebs 11 zwischen zwei zueinander parallelen Platten 28, 29 allseitig verschiebbar gelagert. Der parallele Abstand zwischen den beiden Platten ist größer als die Materialstärke der Aufsattelfläche 17.

Die Fig.6 zeigt zwei Arretierungen 9, eingestellt auf den Abstand der Rasenmäherräder 3 und auf ein annäherndes Fluchten des Antriebszapfens 10 mit der vertikalen Welle 18 und verschraubt mit der Aufsattelfläche 17 des Geräteträgers 6.

Anstelle des Mähmessers 34 (Fig.8) ist an den vertikalen Antriebszapfen 10 ein Außenprofilstück 31 wie ein Mähmesser angeschraubt. Beim Aufsatteln des Rasenmähers 1 auf den Geräteträger 6 schiebt sich das Außenprofilstück 31 in ein dazu passendes Innenprofilstück 32 und bildet eine kraftschlüssige Verbindung zum Winkeltrieb 11.

Wie die Fig.6, 7 und 8 zeigen, ist das Innenprofilstück 32 am oberen Ende eines weiteren Gleitkörpers 35
starr befestigt. Dieser Gleitkörper 35 bildet mit der
rohrartigen und entsprechend profilierten Antriebswelle
18 eine genau zentrierte Teleskopführung. Der Gleitkörper 35 ist durch eine Druckfeder 36 außerdem federnd
(Doppelpfeil) gelagert, und eine sichere kraftschlüssige Verbindung der Profilstücke 31 und 32 ist damit
gegeben.

Fig. 8 zeigt als weiteres Ausführungsbeispiel, wie das
Außenprofilstück 31 ohne Entfernung des Mähmessers 34
auf den Antriebszapfen 10 aufgeschraubt ist. Das Außenprofilstück 31 kann aus Kunststoff oder Metall gefertigt sein.

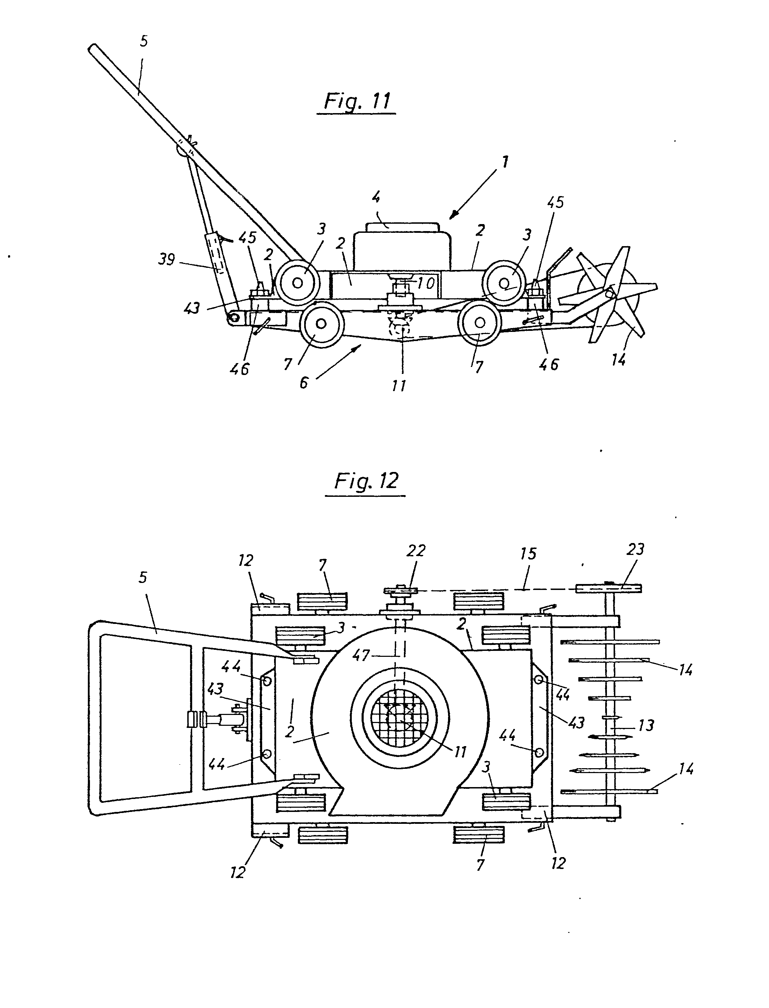

Die Fig. 9 und 10 zeigen die Verankerung eines Rasenmäherrades 3 durch den Kipphebel 8 und die Arretierung
9. Mit verstellbaren Klötzen 37 werden unterschiedliche
Durchmesser der Laufräder 3 ausgeglichen. Die vier Arretierungen 9 werden vor dem Erstgebrauch der Gerätekombination in den Langlöchern 38 so ausgerichtet und
durch Schrauben 16 festgelegt, daß bei Mittelstellung
des allseitig verschiebbaren vertikalen Teils 30 des
Winkeltriebs 11 ein annäherndes Fluchten des Antriebszapfens 10 mit der Antriebswelle 18 gegeben ist.

Zur Stabilisierung des Führungsholms 5 ist in den Fig.
1, 2, 11 und 12 eine Abstützung 39 dargestellt. Diese
Abstützung 39 ist durch die Klemmschraube 40 einstellbar.

Die Fig. 11 und 12 zeigen eine Ausführungsform, bei
der das Mähergehäuse 2 mit Verbindungsansätzen 43 ausgerüstet ist, die auch an Luftkissenmähergehäusen angekantet, angegossen oder nachträglich angeschweißt oder angeschraubt sein können. Diese Verbindungsansätze 43 sind mit Bohrungen 44 versehen, in welche die Verschraubungen 45 beim Aufsatteln des Rasenmähers 1 auf den Geräteträger 6 eingreifen. Hiermit und durch das Aufliegen der Verbindungsansätze 43 auf den Ankerstellen 46 wird der Rasenmäher 1 horizontal und vertikal auf dem Geräteträger 6 ausgerichtet, und es wird zwangsgesteuert eine kraftschlüssige Verbindung des vertikalen Antriebszapfens 10 mit dem Winkeltrieb 11 mit dem Ketten- oder Keilriemenrad 22 direkt durch die Welle 47 verbunden, und der Winkeltrieb 11 ist nicht um 360 Grad schwenkbar oder horizontal allseitig verschiebbar, auch haben die Laufräder 3 des aufgesattelten Rasenmähers 1 keine Berührung mit der Aufsattelfläche 17 des Geräteträgers 6.

Patentansprüche

1. Fahrbarer Geräteträger zur Garten- und Grundstückspflege mit motorisch angetriebenen Anbaugeräten,
   dadurch gekennzeichnet, daß ein Rasenmäher (1) auf
   den Geräteträger (6) aufgesattelt ist und über
   Spannelemente (8) und Arretierungen (9) mit einer
   Aufsattelfläche (17) des Geräteträgers (6) fest
   verankert ist, wobei ein vertikaler Antriebszapfen
   (10) des aufgesattelten Rasenmähers (1) über Profilstücke (31 und 32), einen Gleitkörper (35), einen
   Winkeltrieb (11), eine Gelenkwelle (19) und eine
   Antriebskette (15) mit dem Anbaugerät kraftschlüssig
   verbunden ist.

2. Geräteträger nach Anspruch 1, dadurch gekennzeichnet,
   daß Verbindungsansätze (43) am Gehäuse (2) des Rasenmähers (1) vorgesehen sind und entsprechende Ankerstellen (46) auf der Aufsattelfläche (17) des Geräteträgers (6) fest und/oder einstellbar befestigt sind
   zur Fixierung des Rasenmähers (1) in horizontaler
   und vertikaler Ebene auf dem Geräteträger (6) unter
   Fluchtung des vertikalen Antriebszapfens (10) mit
   der vertikalen Antriebswelle (18) des Winkeltriebs
   (11).

3. Geräteträger nach den Ansprüchen 1 und 2, dadurch
   gekennzeichnet, daß das Profilstück (31) ohne oder
   nach Entfernung des Mähmessers (34) am vertikalen
   Antriebszapfen (10) des Rasenmähers (1) drehschlüssig befestigt ist.

4. Geräteträger nach den Ansprüchen 1 bis 3, dadurch
   gekennzeichnet, daß das Innenprofilstück (32) vertikal federnd gelagert und drehschlüssig mit der vertikalen Antriebswelle (18) des Winkeltriebs (11)
verbunden ist.

5. Geräteträger nach den Ansprüchen 1 bis 4, dadurch
gekennzeichnet, daß die verschiedenen Anbaugeräte
vor oder hinter dem Geräteträger (6) angeordnet und
Haltetaschen (12) allseitig am Geräteträger (6) vorgesehen sind.

6. Geräteträger nach den Ansprüchen 1 bis 5, dadurch
gekennzeichnet, daß die Drehrichtung einer Vertikutiereinrichtung (13 und 14) entgegengesetzt zur normalen Fahrtrichtung des auf den Geräteträger (6) aufgesattelten Rasenmähers (1) gerichtet ist.

7. Geräteträger nach den Ansprüchen 1 bis 6, dadurch
gekennzeichnet, daß der Winkeltrieb (11) in einer
Öffnung (33) der Aufsattelfläche (17) fest verschraubt oder horizontal um 360 Grad schwenkbar und
innerhalb der Öffnung (33) horizontal allseitig verschiebbar gelagert ist.

8. Geräteträger nach den Ansprüchen 1 bis 7, dadurch
gekennzeichnet, daß zwischen dem Führungsholm (5)
des aufgesattelten Rasenmähers (1) und dem Geräteträger (6) eine in ihrer Länge verstellbare Abstützung (39) vorgesehen ist.

9. Geräteträger nach den Ansprüchen 1 bis 8, dadurch
gekennzeichnet, daß die Laufräder (7) des Geräteträgers (6) höhenverstellbar sind.

10. Geräteträger nach den Ansprüchen 1 bis 9, dadurch
gekennzeichnet, daß Unfallverhütungsvorrichtungen am
Geräteträger (6) angebracht sind.

Fig. 1

Fig. 2

_Fig.3_

_Fig.4_

A ←

B ←

_Fig.5_

0034359

_Fig. 6_

_Fig. 7_

_Fig. 8_

_Fig. 9_

_Fig.10_

Fig. 11

Fig. 12

**Europäisches Patentamt**

**EUROPÄISCHER RECHERCHENBERICHT**

Nummer der Anmeldung

EP 81 10 1064

| | EINSCHLÄGIGE DOKUMENTE | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | US - A - 3 151 563 (LITA)<br>* Spalte 2, Zeile 36 - Spalte 3, Zeile 37 * | 1,4,7 | A 01 D 69/00<br>53/08 |
| | -- | | |
| | US - A - 3 693 333 (BISHOP)<br>* Spalte 3, Zeilen 6-62 * | 6 | |
| | -- | | |
| A | US - A - 2 975 839 (BURROWS)<br>* Spalte 1, Zeile 46 - Spalte 2, Zeile 10 * | 1 | |
| | -- | | RECHERCHIERTE SACHGEBIETE (Int. Cl.) |
| A | GB - A - 875 842 (AMBROSE)<br>* Ansprüche * | 1 | A 01 D<br>A 01 B |
| | -- | | |
| A | US - A - 3 051 155 (MEHL)<br>* Ansprüche 1,6,10 * | 1 | |
| | ---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Grunden angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-05-1981 | DE LAMEILLEURE |

EPA form 1503.1 06.78